# EUROPEAN PATENT APPLICATION

(11) **EP 3 628 437 A1**
(43) Date of publication of application: **01.04.2020**
(21) Application number: 19199417.7
(22) Date of filing: 24.09.2019
(51) Int. Cl.: B23K 35/02, B23K 35/28, B23K 35/30, B23K 35/40, B22F 3/093, B22F 3/10, B22F 5/12

(54) **METHOD OF MANUFACTURING METALLIC WELDING WIRES AND METALLIC WELDING WIRES FORMED THEREBY**

(30) Priority: 26.09.2018 US 201816142418
(71) Applicant: General Electric Company, Schenectady, NY 12345 (US)
(72) Inventor: LUCKE, Norbert, 5242 Birr (CH); BREHM, Walter, 25840 Friedrichstadt (DE); SCHOENFELD, Erwin, 5405 Dättwil (CH)
(74) Representative: Dittmann, Rolf

(57) **Abstract**

The subject matter disclosed herein relates to methods of manufacturing metallic welding wires and the metallic welding wires formed thereby. A method of manufacturing a metallic welding wire includes filling a mold (100) with a metallic powder, the metallic powder filling one or more narrow elongated tubes (140) within the mold (100), and heat treating the tubes (140) filled with the metallic powder, thereby forming a solid metallic welding wire within each tube (140).

## Description

### TECHNICAL FIELD

The subject matter disclosed herein relates to methods of manufacturing metallic welding wires. More specifically, various aspects described herein relate to methods of manufacturing metallic welding wires via heat treating a metallic powder filled mold, and metallic welding wires formed thereby.

### BACKGROUND

A welding wire is a slim metallic rod that is melted by a concentrated heat source (e.g., plasma arc, laser beam, etc.) for the purpose of fusing metal pieces together (i.e., welding). Welding wire is commercially available in a variety of types and classifications. Different welding jobs and base metal materials require a corresponding welding wire that is appropriate for the application. Welding wires can have a wide range of mechanical properties, arc behavior, quality and cost. Once the appropriate wire type is determined, it is important to select the correct wire diameter and suitable chemical composition of the wire for the application. However, commercially available welding wires are typically only offered in standard diameters with standard chemical compositions.

When considering some of the latest welding technologies such as pulsed laser welding and micro plasma/tungsten inert gas (TIG) welding, welding wires with non-standard small diameters are needed. Furthermore, in certain applications, welding wires with non-standard chemical compositions may be beneficial. Such welding wires are either not commercially available or very expensive. If available, the welding wires typically have inferior surface quality (e.g., poor/low roundness, poor/high surface roughness) or are very expensive due to increased costs associated with rework (e.g., post-machining processes) needed to attain desired surface quality.

### BRIEF SUMMARY

Methods of manufacturing metallic welding wires and metallic welding wires formed thereby are disclosed. In a first aspect of the disclosure, a method of manufacturing a metallic welding wire includes: filling a mold with a metallic powder, the metallic powder filling one or more narrow elongated tubes within the mold; and heat treating the one or more tubes filled with the metallic powder, thereby forming a solid metallic welding wire within each tube.

The heat treating of the method can form a metallic welding wire that includes a metallic alloy of two or more metals. The heat treating can include a sintering heat treatment.

A metallic welding wire resulting from the method can have one or more of the following properties, without the need for rework to attain such properties: a roundness of at least 0.8 (ideal roundness being 1.0), an average surface roughness (Rₐ) of no more than 2.5 micrometers (µm), and a diameter in a range of 0.1 millimeters (mm) to 1.0 millimeters (mm) ±0.05 millimeters (mm).

In a second aspect of the disclosure, a metallic welding wire is disclosed wherein the metallic welding wire has a roundness of at least 0.8, ideal roundness being 1.0, and has an average surface roughness (Rₐ) of no more than 2.5 micrometers (µm), and wherein the metallic welding wire includes a metallic alloy of two or more metals. The metallic welding wire can also have a diameter in a range of 0.1 millimeters (mm) to 1.0 millimeters (mm) ±0.05 millimeters (mm). The metallic welding wire can also have these roundness, surface roughness and diameter values while not having been subjected to rework.

### BRIEF DESCRIPTION OF THE DRAWINGS

These and other features of this disclosure will be more readily understood from the following detailed description of the various aspects of the disclosure taken in conjunction with the accompanying drawings that depict various embodiments of the disclosure, in which:
FIG. 1 shows a side-view of an example mold used in the method of manufacturing a metallic welding wire of the disclosure.
FIG. 2 shows a schematic of a single tube bundle extending between a top portion and a bottom portion of the mold of FIG. 1.
FIG. 3 shows an enlarged top view of the mold of FIG. 1, specifically a top view of the top portion of the mold of FIG. 1.

It is noted that the drawings of the disclosure are not necessarily to scale. The drawings are intended to depict only typical aspects of the disclosure, and therefore should not be considered as limiting the scope of the disclosure. In the drawings, like numbering represents like elements between the drawings.

### DETAILED DESCRIPTION

The subject matter disclosed herein relates to methods of manufacturing metallic welding wires. More specifically, various aspects described herein relate to methods of manufacturing metallic welding wires via heat treating a metallic powder filled mold, and metallic welding wires formed thereby.

As noted above, there is a need for both welding wires having small diameters, for example down to 0.1 millimeters (mm), and welding wires that can be manufactured from chemical compositions not typically utilized in commercially available welding wires, for example typically brittle metal alloys, and there is also a need for such welding wires to have desired superior surface quality, for example high roundness (e.g., at least 0.8) and low surface roughness (e.g., Ra ≤ 2.5 µm). Various aspects of the disclosure include methods of manufacturing metallic welding wires via heat treating a metallic powder filled mold wherein small diameter welding wires can be produced and non-conventional chemical compositions of the metallic powder can be used. Aspects of the disclosure further include resulting metallic welding wires that have high roundness and low surface roughness without the need for post-machining processes (rework) to be performed in order to attain such attributes. Numerous types, classifications and sizes of welding wires can be manufactured using numerous mold configurations while still adhering to the essence of the disclosure.

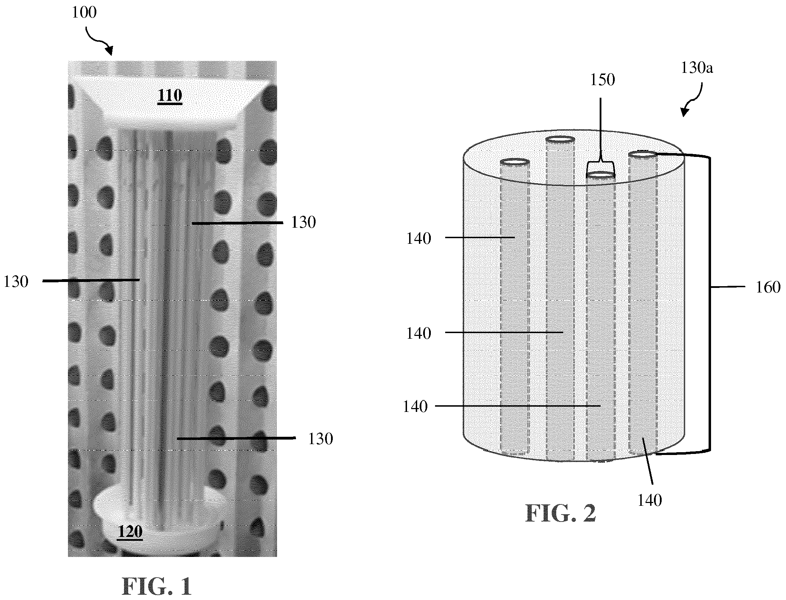

FIG. 1 shows a side-view of a mold 100 used in the manufacturing method of the disclosure, mold 100 having a top portion 110 and a bottom portion 120 wherein a plurality of tube bundles 130 extend between top and bottom portions 110, 120. Mold 100 can include or be entirely composed of a ceramic or any heat (high temperature) resistant material, for example, aluminum oxide (Al₂O₃), zirconium oxide (ZrO₂), or a mixture thereof.

FIG. 2 is a schematic of a given tube bundle 130a wherein a plurality of narrow, elongated tubes 140 are contained therein. Tube bundles 130 as well as tubes 140 can be composed of the same material as mold 100. A given tube 140 can have a cross-sectional geometry with any desired shape, e.g. circular shape, oval shape, flat ribbon shape, etc., with circular cross-sectional geometry being the most typical for welding wires and used for illustration purposes in tubes 140 of FIG. 2.

Each tube 140 having the above-noted cross-sectional geometry also has an inner diameter 150 of said cross-sectional geometry. Inner diameter 150 can be from 0.1 millimeters (mm) to 5 millimeters (mm). Inner diameter 150 can be varied depending on the welding application and/or welding process to be used. Each tube 140 can also have a length 160 of 100 millimeters (mm) to 1000 millimeters (mm). Length 160 can be similarly varied depending on the application and/or process to be used. Each tube 140 can have a straightness deviation of 5% or less over its length 160. Lastly, each tube 140 has an inner surface which preferably has an average surface roughness (Rₐ) of no more than 1.6 micrometers (µm).

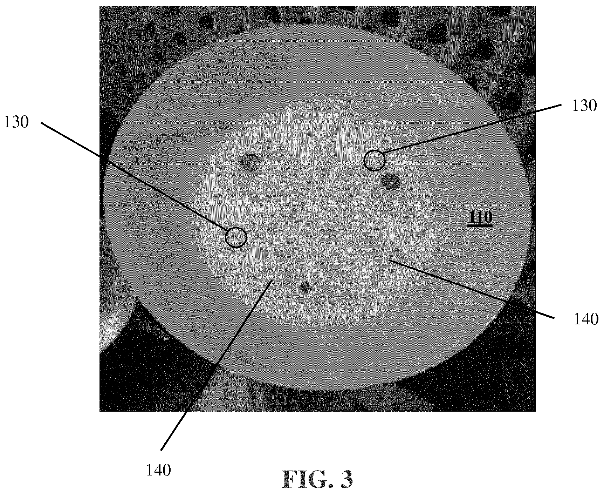

FIG. 3 is an enlarged top view of mold 100 of FIG. 1, specifically a top view of top portion 110 of mold 100. As can be seen in FIG. 3, multiple tube bundles 130 having a plurality of hollow, narrow, elongated tubes 140 therein can be accessed from top portion 110 for filling purposes described herein. The method of manufacturing a metallic welding wire of the disclosure includes filling mold 100 with a metallic powder such that the metallic powder fills at least one narrow elongated tube 140 of mold 100. The metallic powder can have an average particle size of from 20 micrometers (µm) to 150 micrometers (µm). During the filling of mold 100 with the metallic powder, mold 100 can be subjected to axial motion (i.e., up-and-down motion) to increase the packing density of the particles of the metallic powder. The axial motion can also be performed after the filling of mold 100, or can be performed both during and after the filling of mold 100. The axial motion can be performed at a low frequency, for example from 1 Hertz (Hz) to 10 Hertz (Hz). The axial motion can be created by a motion device attached, directly or indirectly, to mold 100. The motion device can be any device capable of creating the desired axial motion, for example a vibrating device such as a pneumatic, electronic or ultrasonic vibrator.

After the filling of mold 100 with the metallic powder, tubes 140 (now filled) are subjected to a heat treatment such that a solid metallic welding wire is formed within each tube 140. The heat treatment can be a sintering heat treatment. Sintering of metallic powder particles is achieved at a particular temperature range and at a particular holding time, both the temperature range and the holding time being primarily dependent on the chemical composition of the metallic powder being used.

More specifically, a maximum heat treatment temperature should be below the liquidus temperature of the metallic powder as a whole or of the dominant component of the metallic powder. On the other hand, a minimum heat treatment temperature still needs to be high enough to allow the particles to sinter together in a reasonable amount of time. The holding time is determined to be the amount of time sufficient to allow enough particles to sinter together to form the solid metallic welding wire within each tube 140. As an example, typical sintering temperatures for nickel-based and cobalt-based heat resistant alloys are between 1100°C and 1300°C, and the holding time (sintering time) thereof can be from 6 hours to 12 hours. Sintering heat treatments can be performed in an atmosphere which prevents or inhibits oxidation of the metallic powder, for example under vacuum or in an inert gas atmosphere (e.g., argon (Ar), helium (He), nitrogen (N₂), etc.).

Upon completion of the heat treatment (e.g., sintering), one or more solid metallic welding wires are formed. These resulting welding wires can have a roundness of at least 0.8, wherein ideal (perfect) roundness is represented as the value 1.0. The resulting welding wires can also have a surface roughness (Rₐ) of no more than 2.5 micrometers (µm). Furthermore, the resulting welding wires may have a straightness deviation (in the axial direction) of no more than 5% over the wire's length. The resulting welding wire may also have a diameter in the range from 0.1 millimeter (mm) to 1.0 millimeter (mm) with a tolerance of, for example, ± 0.05 millimeters (mm). These characteristics of the resulting welding wires (e.g., roundness, surface roughness, straightness and diameter) are attainable by the method of the disclosure without the need for any post-machining processes (rework), thus reducing manufacturing time and cost. Conventional methods of manufacturing welding wires of these diameters typically require time consuming and costly rework to attain the noted characteristics.

Moreover, the method of the disclosure is also capable of producing a metallic welding wire that is a metallic alloy of two or more metals. The metals can include carbon (C), iron (Fe), aluminum (Al), nickel (Ni), cobalt (Co), molybdenum (Mb), manganese (Mn), yttrium (Y) and chromium (Cr). The mixture of metals selected depends on the welding application and type as well as the nature of the base material being welded. Welding wires can be produced by the method of the disclosure from chemical compositions not typically utilized in commercially available welding wires, for example typically brittle metal alloys. Conventional methods of manufacturing welding wires typically cannot produce wires from such brittle, highly-alloyed materials. This is yet another advantage of the method of the disclosure.

In one embodiment of the method of the disclosure, the method can include forming an identifier at the end of the welding wire or near the end of the wire. Such an identifier could act as a label indicating, for example, wire type or composition. Such an identifier could be color-coded, for instance. The identifier could be a plug (e.g., porous ceramic plug) formed at/near the end of the wire. The identifier could be an integrally formed part of the wire by mixing a ceramic powder with the metallic powder at/near the end of the wire-to-be.

The wires produced by the method of the disclosure can be used for any state of the art welding process including, but not limited to, gas metal arc welding, gas tungsten welding, laser welding, arc wire spray processes, etc. The wires of the disclosure may be used for repair work or in new/original welding work. Since the chemical composition of the wires of the disclosure are customizable, the welding wires can be produced to meet specific application needs, for instance to create a repair having the same material properties of the part being repaired or to create a repair having improved properties at the repair.

Regardless of the welding process to be used for the wires or the chemical composition of the wires of the disclosure, the present disclosure affords a quicker and less costly manufacturing process that produces higher quality (e.g., superior roundness, surface roughness and straightness) welding wires and can do so for small diameter wires without the need for rework (e.g., grinding). This is unlike conventional techniques that produce welding wires that can be very expensive, due in part to required rework after production, typically have lower quality, are restricted with respect wire diameter, and are restricted with respect to chemical composition.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of the present disclosure has been presented for purposes of illustration and description, but is not intended to be exhaustive or limited to the disclosure in the form disclosed. Many modifications and variations will be apparent to those of ordinary skill in the art without departing from the scope and spirit of the disclosure. The embodiments were chosen and described in order to best explain the principles of the disclosure and the practical application, and to enable others of ordinary skill in the art to understand the disclosure for various embodiments with various modifications as are suited to the particular use contemplated.

## Claims

1. A method of manufacturing a metallic welding wire, comprising:
filling a mold (100) with a metallic powder, the metallic powder filling one or more narrow elongated tubes (140) within the mold (100); and
heat treating the one or more tubes (140) filled with the metallic powder, thereby forming a solid metallic welding wire within each tube (140).

2. The method of claim 1, wherein the mold (100) comprises a heat resistant material.

3. The method of claim 1, wherein the metallic powder has an average particle size of from 20 micrometers (µm) to 150 micrometers (µm).

4. The method of claim 1, wherein each tube (140) has a cross-sectional geometry having an inner diameter (150) of from 0.1 millimeters (mm) to 5 millimeters (mm).

5. The method of claim 1, wherein each tube (140) has a straightness deviation of 5% or less over a length (160) of the tube (140).

6. The method of claim 1, wherein an inner surface of the one or more tubes (140) has an average surface roughness (Rₐ) of no more than 1.6 micrometers (µm).

7. The method of claim 1, wherein the heat treating includes a sintering heat treatment with a maximum temperature below a liquidus temperature of the metallic powder, a minimum temperature selected to effect sintering of particles of the metallic powder, and a holding time selected to effect the forming of the solid metallic welding wire within each tube (140).

8. The method of claim 7, wherein the sintering heat treatment is performed under vacuum or in an inert gas atmosphere.

9. The method of claim 1, wherein the metallic welding wire has a straightness deviation of 5% or less over a length (160) of the metallic welding wire.

10. The method of claim 1, wherein the metallic welding wire includes a metallic alloy of two or more metals selected from the group consisting of carbon (C), iron (Fe), aluminum (Al), nickel (Ni), cobalt (Co), molybdenum (Mb), manganese (Mn), yttrium (Y) and chromium (Cr).

11. The method of claim 1, further comprising performing axial motion of the mold (100) during the filling of the mold (100) or after the filling of the mold (100) or both during and after the filling of the mold (100), thereby increasing a packing density of particles of the metallic powder.

12. The method of claim 1, further comprising forming an identifier at or near the end of the metallic welding wire.

13. The method of claim 1, wherein the metallic welding wire has
a roundness of at least 0.8, ideal roundness being 1.0;
an average surface roughness (Rₐ) of no more than 2.5 micrometers (µm); and
a diameter in a range from 0.1 millimeters (mm) to 1.0 millimeters (mm).

14. The method of claim 13, wherein the metallic welding wire has not been subjected to rework.
